Europäisches Patentamt

European Patent Office

Office européen des brevets

(11) Veröffentlichungsnummer: **0 318 652**

**A2**

(12) # EUROPÄISCHE PATENTANMELDUNG

(21) Anmeldenummer: **88114982.7**

(22) Anmeldetag: **14.09.88**

(51) Int. Cl.4: **F16J 15/34**

(30) Priorität: **01.12.87 DE 3740694**

(43) Veröffentlichungstag der Anmeldung:
**07.06.89 Patentblatt 89/23**

(84) Benannte Vertragsstaaten:
**DE ES FR GB IT**

(71) Anmelder: **GOETZE AG**
**Bürgermeister-Schmidt-Strasse 17**
**D-5093 Burscheid 1(DE)**

(72) Erfinder: **Deuring, Hans, Dipl.-Ing.**
**Im Eulenflug 29**
**D-5093 Burscheid(DE)**

(54) **Gleitringdichtung.**

(57) Bei bekannten Gleitringdichtungen tritt beim Einsatz das Problem auf, die Abdichtung zwischen Trägerkörper und Gleitring ausreichend sicher zu gestalten. Die neue Gleitringdichtung erzeugt mit einfachen Bauteilen eine sichere Abdichtung.

Zur Kostenreduzierung dient als Dichtung nur ein Gummiring (7), der sowohl die Abdichtung zwischen Trägerkörper (6) und Gleitring (4) als auch die Abdichtung zwischen Trägerkörper (6) und Gehäuse (3) übernimmt.

Die Gleitringdichtung eignet sich insbesondere für den Einsatz in Flüssigkeitspumpen.

**EP 0 318 652 A2**

# Gleitringdichtung

Die Erfindung betrifft eine Gleitringdichtung, bestehend aus einem Gehäuse mit einem axial gerichteten, radial innenliegenden Schenkel, einer in dem Gehäuse festgelegten, axial wirkenden Druckfeder, deren freies Ende mit einem den Gleitring aufnehmenden Trägerkörper zusammenwirkt, wobei der Trägerkörper mit einen radial gerichteten Schenkel unmittelbar an der Rückenfläche des Gleitringes diesen axial abdichtend anliegt und mittels eines Gummiringes gegenüber dem innenliegenden Schenkel des Gehäuses abgedichtet ist.

Die US-PS 3.897.957 offenbart eine Gleitringdichtung der genannten Gattung. Zur Abdichtung zwischen Trägerkörper und Gehäuse ist ein Gummiring mit C-förmigem Querschnitt vorzusehen, wobei die radiale Federkraft des Gummiringes durch Einlage von Federelementen erhöht werden kann. Trägerkörper und Gleitring sind über einen Paßsitz miteinander verbunden.

Während des Betriebes können derartige Gleitringdichtungen hohen Temperaturschwankungen und Druckdifferenzen ausgesetzt sein. Dabei kann es vorkommen, daß der Paßsitz keine ausreichende Dichtung zwischen Trägerkörper und Gleitring erzeugt, so daß das abzudichtende Medium durch den Spalt zwischen beiden Bauteilen dringen kann. Insbesondere bei nicht metallischen Gleitringen, wie zum Beispiel Ringe aus Kohle oder Keramik, kann bei Temperaturschwankungen schnell ein Leckspalt auftreten. Durch die unterschiedlichen Wärmeausdehnungskoeffizienten der Bauteile kann deshalb auf eine zusätzliche elastische Dichtung zwischen den Bauteilen nicht verzichtet werden. Aufgrund des zusätzlichen Bauteiles wird die Gleitringdichtung aber in der Herstellung teuer.

Der Erfindung liegt die Aufgabe zugrunde, die Funktion einer gattungsgemäßen Gleitringdichtung auch bei großen Temperaturschwankungen sicherzustellen, wobei die Herstellungskosten gesenkt werden.

Diese Aufgabe wird erfindungsgemäß dadurch gelöst, daß der radiale Schenkel des Trägerkörpers nur an einem Teil der Rückenfläche des Gleitringes und der Gummiring unmittelbar an dem verbleibenden Teil der Rückenfläche unter axialer Spannung anliegt. Hierdurch wird mit nur einem Dichtelement eine zuverlässige Abdichtung zwischen Trägergehäuse und Gleitring einerseits und eine Abdichtung zwischen Trägerkörper und Gehäuse andererseits geschaffen. Da weder der Gleitring noch der Trägerkörper an den korrespondierenden Aufnahmeflächen kostenintensiv, das heißt mit hoher Maßtoleranz, bearbeitet werden müssen, können einfache geometrische Formen und Bauteile zur Anwendung gelangen.

Einem weiteren Gedanken der Erfindung gemäß, weist der zwischen Trägerkörper und Gleitring angeordnete Gummiring einen trapezförmigen Querschnitt auf. Auf diese Weise übernimmt der sogenannte Gummitrapezring nicht nur die statische Abdichtung zwischen Gehäuse und Trägerkörper sowie zwischen Trägerkörper und Gleitring, sondern erzeugt eine die Federkraft der Druckfeder unterstützende Axialkraft. Die Größe der Axialkraft läßt sich einfach und kostengünstig über die Dimensionierung des Gummitrapezringes variieren. Da der Gummiring vom Schlauch abstechbar ist, entstehen hierdurch keine Fertigungs-Mehrkosten.

Zur axialen Abstützung des trapezförmigen Gummiringes weist der Trägerkörper einen radial nach innen abgewinkelten Endbereich auf. Der so zwischen der Rückenfläche des Gleitringes und dem abgewinkelten Endbereich eingespannte Gummiring ist aufgrund der Reibbeiwerte in der Lage, den Gleitring verdrehsicher mit dem Trägerkörper zu verbinden. Darüber hinaus kann, einem weiteren Gedanken der Erfindung gemäß, der Gleitring durch einen Klebstoff mit dem Trägerkörper verbunden werden. Hierdurch bilden Trägerkörper, Gleitring und Gummiring eine Baueinheit, die leicht in das Gehäuse montiert werden kann.

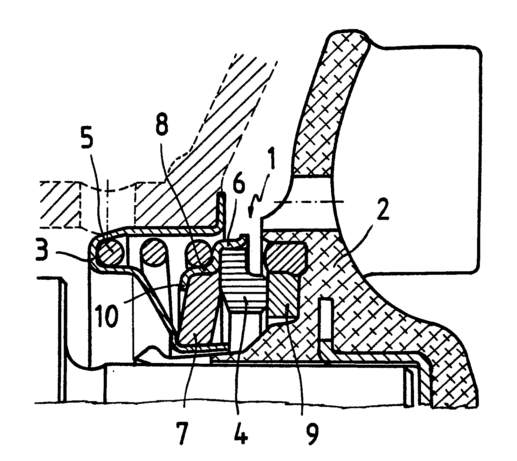

Die Erfindung wird anhand eines in der Zeichnung dargestellten Ausführungsbeispieles näher erläutert:

In der Figur ist eine erfindungsgemäße Gleitringdichtung 1 zur Abdichtung einer Flüssigkeitspumpe 2 dargestellt.

Die Gleitringdichtung 1 besteht aus einem Gehäuse 3, einem Gleitring 4, einer Druckfeder 5 und einem Trägerkörper 6. Der Trägerkörper 6 dient zur Aufnahme des aus kunstharzimprägnierter Hartbrandkohle bestehenden Gleitringes 4 und eines einen trapezförmigen Querschnitt aufweisenden Gummiringes 7. Dabei liegt sowohl der Gummiring 7 als auch der Trägerkörper 6 mit einem radialen Schenkel 8 an der Rückenfläche des Gleitringes 4 an. Die einfache Geometrie des Trägerkörpers 6 erlaubt ein kostengünstiges Herstellungsverfahren, beispielsweise durch Tiefziehen. An einem radial nach innen abgewinkelten Endbereich 10 des Trägerkörpers 6 stützt sich der Gummiring 7 axial ab beziehungsweise er liegt unter axialer Spannung zwischen dem Endbereich 10 und der Rückenfläche des Gleitringes 4. Der Gummiring 7 dichtet auf diese Art und Weise statisch gegenüber dem Gleitring 4 und dem Gehäuse 3 ab. Gleichzeitig kann jedoch die Federkraft der Druckfeder 5 über den Trägerkörepr 6 unmittelbar auf den Gleitring 4, das heißt ohne Zwischenlage von Elastomerteilen, übertragen werden.

Darüber hinaus kann die Reibungswärme zwischen Gleitring 4 und dessen Laufpartner 9, welcher innerhalb der Pumpe 2 festgelegt ist, gut abgeleitet werden.

Da der Gummiring 7 unter axialer Spannung an der Rückenfläche des Gleitringes 4 anliegt, kann auf die mechanische Drehsicherung verzichtet werden. Die Haftkräfte zwischen Gleitring 4 und Gummiring 7 reichen aus, den Gleitring 4 sicher innerhalb des Trägerkörpers 6 zu halten. Durch diese Konstruktion können deshalb der Trägerkörper 6 und der Gleitring 4 mit großer Maßtoleranz gefertigt werden, ein Paßsitz ist nicht notwendig.

In Abhängigkeit von der Art des zu verwendenden Gleitringwerkstoffes kann zusätzlich zur Reibkraftdrehsicherung ein Klebstoff zwischen der Rükenfläche des Gleitringes 4 und dem radialen Schenkel 8 des Trägerkörpers 6 eingebracht werden, wodurch einerseits die Verdrehsicherung erhöht wird und andererseits Gleitring 4, Gummiring 7 und Trägerkörper 6 zu einer Baueinheit zusammengefaßt werden, welche anschließend leicht in das Gehäuse 3 montiert werden kann.


**Ansprüche**

1. Gleitringdichtung, bestehen aus einem Gehäuse mit einem axial gerichteten, radial innenliegenden Schenkel, einer in dem Gehäuse festgelegten, axial wirkenden Druckfeder, deren freies Ende mit einem den Gleitring aufnehmenden Trägerkörper zusammenwirkt, wobei der Trägerkörper mit einem radial gerichteten Schenkel unmittelbar an der Rückenfläche des Gleitringes diesen axial abstützend anliegt und mittels eines Gummiringes gegenüber dem innenliegenden Schenkel des Gehäuses abgedichtet ist, dadurch gekennzeichnet, daß der radiale Schenkel (8) des Trägerkörpers (6) nur an einem Teil der Rückenfläche des Gleitringes (4) und der Gummiring (7) unmittelbar an dem verbleibenden Teil der Rückenfläche unter axialer Spannung anliegt.

2. Gleitringdichtung nach Anspruch 1, dadurch gekennzeichnet, daß der Gummiring (7) einen trapezförmigen Querschnitt aufweist.

3. Gleitringdichtung nach den Ansprüchen 1 und 2, dadurch gekennzeichnet, daß der Trägerkörper (6) einen radial nach innen abgewinkelten Endbereich (10) zur axialen Abstützung des trapezförmigen Gummiringes (7) aufweist.

4. Gleitringdichtung nach den Ansprüchen 1 bis 3, dadurch gekennzeichnet, daß der Trägerkörper (6) mit dem Gleitring (4) verdrehsicher verbindbar ist.

5. Gleitringdichtung nach den Ansprüchen 1 bis 4, dadurch gekennzeichnet, daß der Gleitring (4) durch einen Klebstoff mit dem Trägerkörper (6) verbunden ist.